# EUROPEAN PATENT APPLICATION

(11) **EP 3 168 900 A1**
(43) Date of publication of application: **17.05.2017**
(21) Application number: 15194009.5
(22) Date of filing: 11.11.2015
(51) Int. Cl.: H01M 2/14, H01M 2/16, H01G 11/52, H01M 4/131

(54) **ELECTRODE AND SEPARATOR ASSEMBLY FOR AN ELECTROCHEMICAL CELL**

(71) Applicant: Solvay Specialty Polymers Italy S.p.A., 20021 Bollate (MI) (IT)
(72) Inventor: MOLENA, Elena, 20131 Milano (MI) (IT); BISO, Maurizio, 19032 Lerici (SP) (IT); HAMON, Christine, 20021 Bollate (MI) (IT)
(74) Representative: Benvenuti, Federica

(57) **Abstract**

The present invention pertains to an electrode and separator assembly for an electrochemical cell, to a method for its preparation and to an electrochemical cell comprising such assembly.

## Description

### Technical Field

The present invention pertains to an electrode and separator assembly for an electrochemical cell, to a method for its preparation and to an electrochemical cell comprising such assembly.

### Background Art

Vinylidene fluoride polymers are known in the art to be suitable as binders for the manufacture of composite separators for use in non-aqueous-type electrochemical devices such as batteries, preferably secondary batteries, and electric double layer capacitors.

Inorganic filler materials have been long used to fabricate battery separators having a composite structure, said composite separators comprising the filler materials distributed in a polymeric binder matrix, in order to increase the safety of the device. These filler materials are typically produced as finely divided solid particulates and used for reinforcing the polymeric binder material used to fabricate the separator.

A separator precursor solution is typically formulated as an ink or paste comprising a solid particulate material dispersed in a solution of a polymer binder in a suitable solvent. The ink solution so obtained is usually disposed onto a surface of a non-coated inert support or of an electrode layer and the solvent is then removed from the solution layer to deposit a separator layer which adheres to the electrode or to the inert support.

A solvent system is typically used to disperse the polymer binder, which generally comprises N-methyl pyrrolidone (NMP) or mixtures of N- methyl pyrrolidone and a diluting solvent such as acetone, propyl acetate, methyl ethyl ketone and ethyl acetate. For instance, US 2002/0168569 (ATOFINA) 14/11/2002 discloses a process for manufacturing separators for Lithium-ion batteries, said process comprising processing a microcomposite powder comprising from 20% to 80% by weight of a fluoropolymer and from 80% to 20% by weight of fillers. This microcomposite powder may be processed in order to result in separators suitable for use in lithium-ion batteries notably by dispersion in water or in a solvent such as acetone or N-methyl-2-pyrrolidone to obtain a paste, which is then applied to a support by doctor blading and dried.

In WO2013/120858 a process for the manufacturing of a composite separator for a battery is disclosed, comprising the steps of a applying an aqueous suspension of fine particles (latex) of a fluorinated polymer onto at least one surface of an inert substrate layer to provide a coating composition layer and drying said coating composition layer at a temperature of at least 60°C, preferably of at least 100°C, and at least 180°C being indicated as preferred temperatures, to provide a composite separator.

The coated separators obtained according to the processes of the prior art are assembled with the electrode (generally the cathode) by simply pressing the components together or hot laminating the coated separator on the electrode surface. However, assemblies of this kind generally suffer from the disadvantage that the separator and the electrode are prone to delamination, eventually leading to loss of efficiency and break-down of the device in which they are used.

There is thus a need in the art for an effective and stable separator/electrode assembly for use in electrochemical cells, such as secondary batteries and capacitors/supercapacitors.

### Summary of invention

It has been developed an assembly for an electrochemical cell comprising:
a) a separator for an electrochemical cell comprising a substrate layer (P), which layer is at least partially coated with a composition (composition (C)) comprising a component (F) consisting of a vinylidene fluoride (VDF) polymer, or of a blend of VDF polymers, wherein not less than 40% in weight over the total weight of (F) (wt%) consists of at least one vinylidene fluoride copolymer (copolymer (A)), and wherein not less than 3 wt% of the recurring units of copolymer (A) derive from hexafluoropropylene (HFP); and
b) an electrode,
wherein a) permanently adheres to b).

In an aspect, the present invention pertains to an electrochemical cell comprising the assembly as defined above.

In another aspect, the present invention provides a separator for an electrochemical cell comprising a substrate layer (P), which layer is at least partially coated with a composition (composition (C)) comprising a component (F) consisting of a vinylidene fluoride (VDF) polymer, or of a blend of VDF polymers, wherein not less than 40% in weight over the total weight of (F) (wt%) consists of at least one vinylidene fluoride copolymer (copolymer (A)), and wherein not less than 3 wt% of the recurring units of copolymer (A) derive from hexafluoropropylene (HFP).

In another aspect, the present invention provides a process for the preparation of the assembly for an electrochemical cell as defined above which process comprises the steps of:
i. providing the at least partially coated separator a);
ii. providing the electrode b);
iii. assembling a) and b) by contacting at least one side of a) and one side of b);
iv. treating the assembly obtained in step iii. to obtain permanent adhesion of a) and b).

### Brief description of drawings

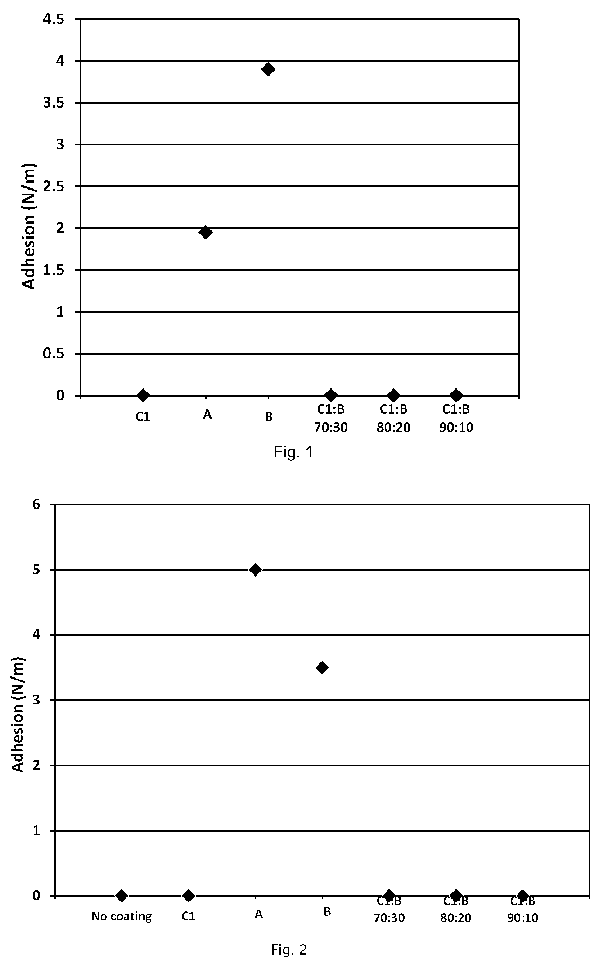

Figure 1 depicts the results of a test carried out on separator-electrode assemblies according to the invention (A, B), obtained via coating of a support layer with a copolymer (A) latex, and comparative separators, which were prepared using a coating composition comprising a VDF copolymer that contains less than 2 wt % of HFP recurring units, wherein the assembly is obtained by lamination of the electrode and separator at 70°C and 50 MPa.
Figure 2 depicts the results of a test carried out on separator-electrode assemblies according to the invention (A, B), obtained via coating of a support layer with a copolymer (A) latex, and comparative separators, which were prepared using a coating composition comprising a VDF copolymer that contains less than 2 wt % of HFP recurring units, wherein the assembly is obtained by lamination of the electrode and separator at 80°C and 50 MPa.

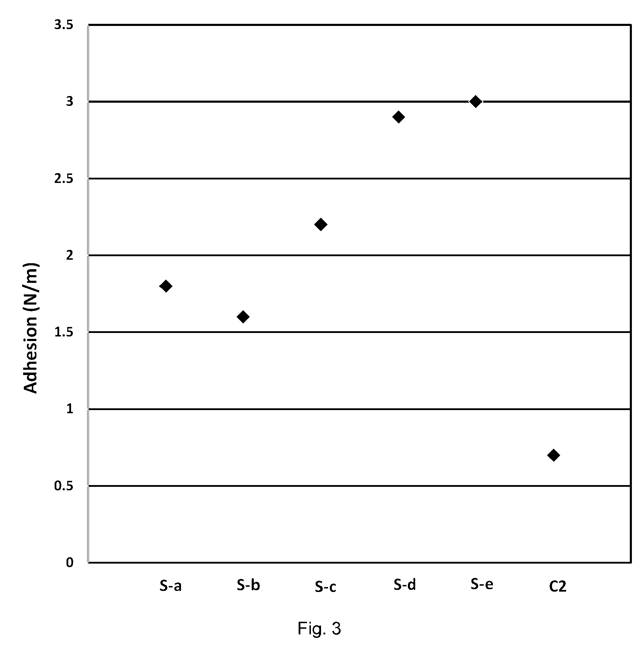

Figure 3 depicts the results of a test carried out on separator-electrode assemblies according to the invention (S/a to S/e), wherein the electrode was coated using a solution of VDF copolymer in acetone and water, and comparative C2, which were prepared using a coating composition comprising a VDF copolymer that contains less than 2 wt % of HFP recurring units, wherein the assembly is obtained by lamination of the electrode and separator at 85°C for 15 min and 1 MPa.

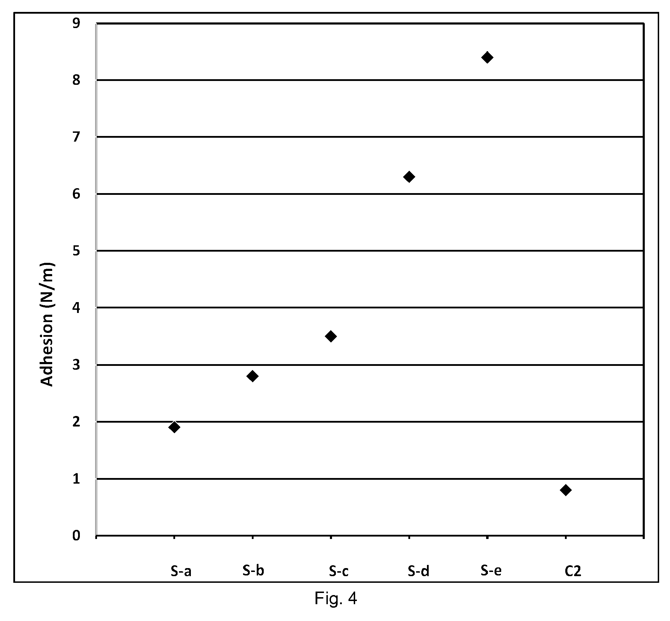

Figure 4 depicts the results of a test carried out on separator-electrode assemblies according to the invention (S/a to S/e), wherein the electrode was coated using a solution of VDF copolymer in acetone and water, wherein the assembly is obtained by lamination of the electrode and separator at 95°C for 15 min and 1 MPa.

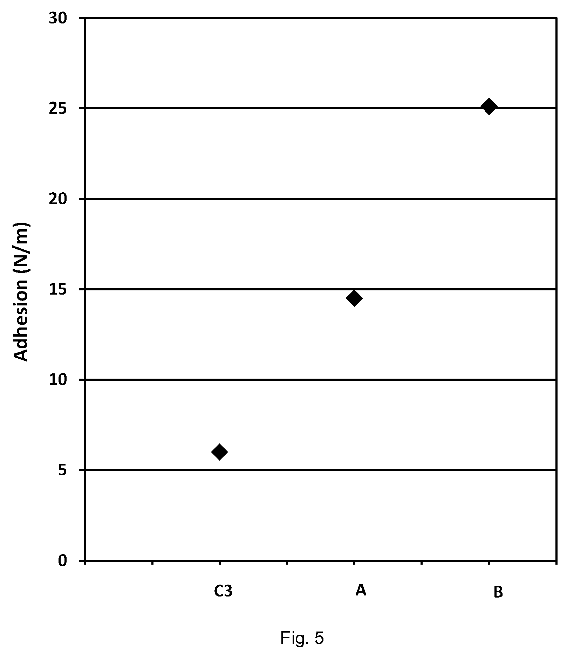

Figure 5 depicts the results of a test carried out on separator-electrode assemblies according to the invention (A and B), obtained via coating of a support layer with a coating comprising copolymer (A) latex in the absence of alumina, and comparative separator C3, which was prepared using a corresponding coating composition comprising a VDF copolymer that contains less than 1wt % of HFP recurring units, wherein the assembly is obtained by lamination of the electrode and separator at 70°C, 1 MPa for 15 min.

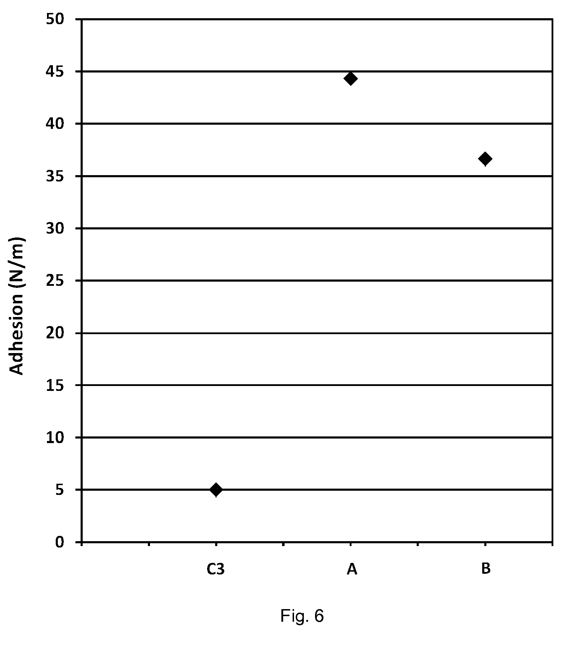

Figure 6 depicts the results of a test carried out on separator-electrode assemblies according to the invention (A and B), obtained via coating of a support layer with a coating comprising copolymer (A) latex in the absence of alumina, and comparative separator C3, which was prepared using a corresponding coating composition comprising a VDF copolymer that contains less than 1wt % of HFP recurring units, wherein the assembly is obtained by lamination of the electrode and separator at 90°C, 1 MPa for 15 min.

### Description of embodiments

Unless otherwise specified, in the context of the present invention the amount of a component in a composition is indicated as the ratio between the weight of the component and the total weight of the composition multiplied by 100 (also: "wt%").

As used herein, the term "aqueous medium" indicates a liquid system comprising at least 5 wt% of water.

By the term "separator", it is hereby intended to denote a porous monolayer or multilayer polymeric material, which electrically and physically separates electrodes of opposite polarities in an electrochemical cell and is permeable to ions flowing between them.

By the term "electrochemical cell", it is hereby intended to denote an electrochemical apparatus comprising a positive electrode, a negative electrode and a liquid, gel or solid electrolyte, wherein a monolayer or multilayer separator is permanently adhered to at least one surface of one of said electrodes.

Non-limitative examples of electrochemical cells include, notably, batteries, preferably secondary batteries, and electric double layer capacitors ("supercapacitors").

For the purpose of the present invention, by "secondary battery" it is intended to denote a rechargeable battery. Non-limitative examples of secondary batteries include, notably, alkaline or alkaline-earth secondary batteries.

As used herein, the term "electrode" indicates a layer comprising a binder, generally formed of polymeric materials, and an electro-active compound.

For the purpose of the present invention, the term "electro-active compound [compound (EA)]" is intended to denote a compound which is able to incorporate or insert into its structure and substantially release therefrom alkaline or alkaline-earth metal ions during the charging phase and the discharging phase of an electrochemical device. The compound (EA) is preferably able to incorporate or insert and release lithium ions.

Generally, techniques for manufacturing an electrode involve the use of solvents, e.g. organic solvents, such as N-methyl-2-pyrrolidone (NMP), or an aqueous medium, for dissolving VDF polymer binders and homogenizing them with a powdery electrode material and all other suitable components to produce a paste to be applied to a metal collector (e.g. an aluminium collector). Non-limiting examples of electrodes and methods for their manufacturing are described in WO 2013/010936 A (SOLVAY SPECIALTY POLYMERS ITALY) 24.01.2013 , and references cited therein.

In the case of forming a positive electrode for a lithium-ion secondary battery, the compound (EA) may comprise a composite metal chalcogenide of formula LiMQ₂, wherein M is at least one metal selected from transition metals such as Co, Ni, Fe, Mn, Cr and V and Q is a chalcogen such as O or S. Among these, it is preferred to use a lithium-based composite metal oxide of formula LiMO₂, wherein M is the same as defined above. Preferred examples thereof may include LiCoO₂, LiNiO₂, LiNiₓCO₁₋ₓO₂ (0 < x < 1) and spinel-structured LiMn₂O₄.

As an alternative, in the case of forming a positive electrode for a lithium-ion secondary battery, the compound (EA) may comprise a lithiated or partially lithiated transition metal oxyanion-based electro-active material of formula M1M2(JO4)_{f}E_{1-f}, wherein M1 is lithium, which may be partially substituted by another alkali metal representing less than 20% of the M1 metals, M2 is a transition metal at the oxidation level of +2 selected from Fe, Mn, Ni or mixtures thereof, which may be partially substituted by one or more additional metals at oxidation levels between +1 and +5 and representing less than 35% of the M2 metals, including 0, JO4 is any oxyanion wherein J is either P, S, V, Si, Nb, Mo or a combination thereof, E is a fluoride, hydroxide or chloride anion, f is the molar fraction of the JO4 oxyanion, generally comprised between 0.75 and 1.

The M1M2(JO4)_{f}E_{1-f} electro-active material as defined above is preferably phosphate-based and may have an ordered or modified olivine structure.

More preferably, the compound (EA) has formula Li₃₋ₓM'_{y}M"_{2-y}(JO4)₃ wherein 0≤x≤3, 0≤y≤2, M' and M" are the same or different metals, at least one of which being a transition metal, JO4 is preferably PO4 which may be partially substituted with another oxyanion, wherein J is either S, V, Si, Nb, Mo or a combination thereof. Still more preferably, the compound (EA) is a phosphate-based electro-active material of formula Li(FeₓMn₁₋ₓ)PO₄ wherein 0≤x≤1, wherein x is preferably 1 (i.e. lithium iron phosphate of formula LiFePO₄).

An electroconductivity-imparting additive may be added to improve the conductivity of a resultant composite electrode layer formed by applying and drying of the electrode-forming composition to form electrode (B) in the assembly of the present invention, particularly when using an active substance, such as LiCoO₂ or LiFePO₄, which has a limited electron-conductivity. Examples thereof may include: carbonaceous materials, such as carbon black, graphite fine powder and fiber, and fine powder and fibre of metals, such as nickel and aluminium.

The active substance for an electric double layer capacitor may preferably comprise fine particles or fibre, such as activated carbon, activated carbon fibre, carbon nanotubes, graphene, silica or alumina particles, having an average particle (or fibre) diameter of 0.05-100 µm and a specific surface area of 100-3000 m²/g, i.e., having a relatively small particle (or fibre) diameter and a relatively large specific surface area compared with those of active substances for batteries.

The preferred electrode-forming composition for positive electrodes comprises:
(a) a polymer binder (PB), in an amount from 0.1 to 10% wt, preferably from 1 to 9% wt, more preferably about 3% wt, with respect to the total weight (a)+(b)+(c);
(b) carbon black as electroconductivity-imparting additive, in amount from 1 to 10% wt, preferably from 2 to 6% wt, more preferably about 3% wt, with respect to the total weight (a)+(b)+(c);
(c) a powdery electrode material, preferably a composite metal chalcogenide represented by a general formula of LiMY₂, as above detailed, or a lithiated or partially lithiated transition metal oxyanion-based electrode materials of the nominal formula AB(XO₄)_{f}E_{1-f}, as above detailed, in an amount from 80 to 99% wt, preferably from 85 to 97% wt, more preferably about 95% wt.

As per the polymer binder (PB), polymers well known in the art can be used including, preferably, vinylidene fluoride (VDF) polymers and even more particularly, VDF polymers comprising recurring units derived from VDF and from 0.01% to 5% by moles of recurring units derived from at least one (meth)acrylic monomer (MA) of formula (I) as defined:

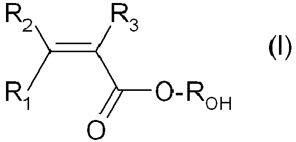

In the case of forming a negative electrode for a lithium battery, the active substance may preferably comprise a carbonaceous material, such as graphite, activated carbon or a carbonaceous material obtained by carbonization of phenolic resin, pitch, etc. The carbonaceous material may preferably be used in the form of particles having an average diameter of ca. 0.5-100 µm.

The term "permanent adhesion" referred to the assembly of the present invention indicates that the coated separator (a) and the electrode (b) are linked or interpenetrated such that they cannot be separated by application of a low to moderate force (e.g. less than 1 Newton/meter, i.e. N/m).

By the term "composite separator", it is hereby intended to denote a separator as defined above wherein non-electroactive inorganic filler materials are incorporated into a polymeric binder material. The composite separator obtained according to the invention is advantageously an electrically insulating composite separator suitable for use in an electrochemical cell.

The separator for an electrochemical cell of the present invention can advantageously be an electrically insulating composite separator suitable for use in an electrochemical cell. When used in an electrochemical cell, the composite separator is generally filled with an electrolyte which advantageously allows ionic conduction within the electrochemical cell. Preferably, said electrolyte is liquid or semi-liquid.

In some embodiments of the invention, the composition (C) used as coating of the separator may advantageously comprise a non-electroactive inorganic filler material, that is uniformly distributed within a polymeric matrix. By the term "non-electroactive inorganic filler material", it is hereby intended to denote an electrically non-conducting inorganic filler material, which is suitable for the manufacture of an electrically insulating separator for electrochemical cells. Preferably, the composition (C) used as coating of the substrate layer (P) in the assembly according to the invention comprises from 10 to 99 wt%, more preferably 30 to 95 wt%, 40 to 93 wt%, 50 to 90 wt% or 60 to 88 wt% of the non-electroactive inorganic filler material.

The non-electroactive inorganic filler material in the separator according to the invention typically has an electrical resistivity (p) of at least 0.1 x 10¹⁰ ohm.cm, preferably of at least 0.1 x 10¹² ohm.cm, as measured at 20°C according to ASTM D 257. Non-limitative examples of suitable non-electroactive inorganic filler materials include, notably, natural and synthetic silicas, zeolites, aluminas, titanias, metal carbonates, zirconias, silicon phosphates and silicates and the like. The non-electroactive inorganic filler material is typically under the form of particles having an average size from 0.01 µm to 50 µm, as measured according to ISO 13321.

The non-electroactive inorganic filler material can be uniformly dispersed in the polymeric matrix of composition (C) to form pores having an average diameter from 0.1 µm to 5 µm. The pore volume fraction of the composite separator obtained from the process of the invention is at least 25%, preferably at least 40%. The composite separator obtained from the process of the invention has a total thickness typically comprised between 2 µm and 100 µm, preferably between 2 µm and 40 µm.

In other embodiments of the invention, the composition (C) does not comprise a non-electroactive inorganic filler material.

For the purpose of the present invention, by vinylidene fluoride (VDF) polymer it is intended to denote a polymer that comprises recurring units derived from vinylidene fluoride (VDF), i.e. a polymer derived from the polymerization of recurring units including vinylidene fluoride (VDF), which are present in the final polymer in an amount that is not less than 40% in weight, preferably not less than 60% in weight, over the total weight of the polymer. The term "polymer" indicates generally homopolymer or copolymer of VDF, i.e. polymers wherein the units derived from VDF may form up to 100% of the total recurring units.

For the purpose of the present invention, by vinylidene fluoride copolymer (copolymer (A)) comprising at least 3 wt% of recurring units deriving from hexafluoropropylene (HFP), it is intended to denote a polymer derived from the polymerization of recurring units deriving from vinylidene fluoride (VDF), present in the final copolymer in an amount that is at least 40% in weight over the total weight of the copolymer, and of not less than 3 wt% of recurring units deriving from hexafluoropropylene. Preferably, copolymer (A) contains not less than 50 wt%, more preferably not less than 65 wt%, or 70 wt% or 85% of recurring units deriving from VDF. Preferably, the content of recurring units derived from HFP in copolymer (A) according to the present invention is 4 to 50 wt%, more preferably from 5 to 45 wt%, even more preferably from 15 to 40 or 25-39 wt%.

The composition (C) used as coating of separator a) according to the present invention may be obtained starting from a powder, a slurry, a solution in a suitable solvent (such as acetone, methyl ethyl ketone or NMP, or mixture thereof, optionally in the presence of water), a suspension or an emulsion (latex) of at least one copolymer (A) as defined above.

In a preferred embodiment, the coating is obtained starting from an emulsion (i.e. a latex) of at least one VDF-based polymer in an aqueous medium, wherein the average primary particle size of powders of a polymer or copolymer in the aqueous emulsion is typically lower than 1 µm, as measured according to ISO 13321.

For the purpose of the present invention, by "average primary particle size" it is intended to denote primary particles of copolymer (A) deriving from aqueous emulsion polymerization. However, the primary particles of copolymer (A) can form agglomerates (i.e. collection of primary particles), which might be obtained by recovery and conditioning steps of such polymer/copolymer manufacture such as concentration and/or coagulation of aqueous latexes of the copolymer (A) and subsequent drying and homogenization to yield the respective powders.

The particles of the VDF-based polymers used for coating the separator of the invention are distinguishable from an aqueous slurry prepared by dispersing powders a polymer or of a copolymer in an aqueous medium. The average particle size of powders of a polymer or copolymer dispersed in an aqueous slurry is typically higher than 1 µm, as measured according to ISO 13321.

Preferably, the average particle size of the primary particles of VDF-based polymer as defined above is above 20 nm, more preferably above 30 nm, even more preferably above 50 nm, and/or is below to 600 nm, more preferably below 400 or below 300 nm, as measured according to ISO 13321.

Preferably, when the coating composition (C) is obtained starting from an emulsion (i.e. a latex) of at least one VDF-based copolymer (A) in an aqueous medium, the amount of recurring units deriving from HFP in copolymer (A) is from 7 to 50 wt%, more preferably from 15 to 45 wt%, even more preferably from 25 to 39 wt%.

In another preferred embodiment, the coating composition (C) is obtained starting from a suspension (i.e. a slurry) of at least one VDF-based copolymer (A) in a suitable liquid medium. Preferably, in this embodiment, the amount of recurring units deriving from HFP in copolymer (A) is from 4 to 15 wt%, more preferably from 5 to 12 wt%.

In a preferred form, the only VDF polymer (component (F)) in composition (C) is copolymer (A) as defined above.

In a preferred form, the coating of the separator according to the invention, in addition to the VDF copolymer (A) as defined above, further comprises another vinylidene fluoride polymer (hereafter: polymer (B)), different from copolymer (A) and comprising less than 2 wt% of recurring units deriving from hexafluoropropylene, provided that the content of polymer (A) in (F) is not less than 40 wt%. In other words, the separator according to the invention is preferably coated with a composition comprising a mixture (F) of VDF polymers, wherein a portion of (F) consists of copolymer (A) and a portion of (F) comprises polymer (B). More preferably, the amount of polymer (B) in (F) is below 40 wt% or below 30 wt% or below 20 wt% or below 10 wt%.

Polymer (B) can be a VDF homopolymer or a copolymer, provided that its content of recurring units deriving from HFP is below 2 wt%, preferably below 1.5% or below 1%, more preferably is 0, i.e. below the limit of detection of HFP, using the analytical techniques known to the person skilled in the art.

Copolymer (A) and, when present, polymer (B) in the coating of the separator according to the present invention may contain other co-monomers, i.e. units deriving from monomers other than HFP and VDF, preferably in amounts below 5 wt%, typically below 2 wt% or 1 wt% over the total weight of co-polymer (A).

Such co-monomers can be selected among those conventionally used as monomers copolymerizable with vinylidene fluoride, such as vinyl fluoride, trifluoroethylene, trifluorochloroethylene, tetrafluoroethylene, hexafluoropropylene, and fluoroalkyl vinyl ether, and mixtures thereof.

The copolymer and, when present, polymer (B) may typically comprise recurring units derived from at least one (meth)acrylic monomer (MA) having formula (I) here below: 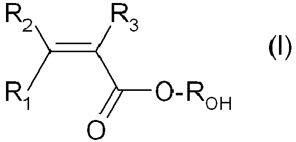 wherein:
- R₁, R₂ and R₃, equal to or different from each other, are independently selected from a hydrogen atom and a C₁-C₃ hydrocarbon group, and
- R_{OH} is a hydrogen atom or a C₁-C₅ hydrocarbon moiety comprising at least one hydroxyl group.

Should the copolymer and, when present, polymer (B) comprise recurring units derived from at least one (meth)acrylic monomer (MA), it typically comprises at least 0.01 wt%, preferably at least 0.02 wt%, more preferably at least 0.03 wt% of recurring units derived from at least one (meth)acrylic monomer (MA) having formula (I) as described above.

Should the copolymer and, when present, polymer (B) comprise recurring units derived from at least one (meth)acrylic monomer (MA), it typically comprises at most 10 wt%, preferably at most 5 wt%, more preferably at most 2 wt% of recurring units derived from at least one (meth)acrylic monomer (MA) having formula (I) as described above.

The (meth)acrylic monomer (MA) preferably complies with formula (II) here below: 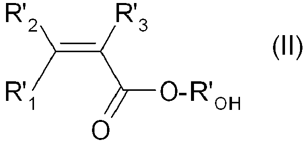 wherein:
- R'₁, R'₂ and R'₃ are hydrogen atoms, and
- R'_{OH} is a hydrogen atom or a C₁-C₅ hydrocarbon moiety comprising at least one hydroxyl group.

Non-limitative examples of (meth)acrylic monomers (MA) include, notably, acrylic acid, methacrylic acid, hydroxyethyl(meth)acrylate, hydroxypropyl(meth)acrylate, hydroxyethylhexyl(meth)acrylate.

The (meth)acrylic monomer (MA) is more preferably selected from the followings:
- hydroxyethyl acrylate (HEA) of formula: 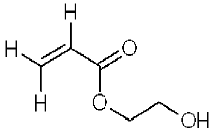
- 2-hydroxypropyl acrylate (HPA) of either of formulae: 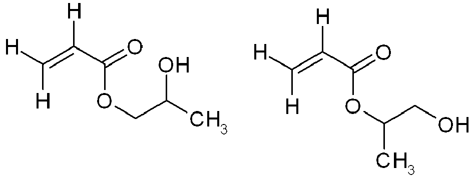
- acrylic acid (AA) of formula: 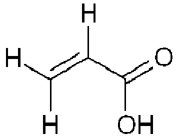
- and mixtures thereof.

The (meth)acrylic monomer (MA) is even more preferably acrylic acid (AA) or hydroxyethyl acrylate (HEA).

The coating composition (C) can optionally comprise at least one other component, in addition to copolymer (A), and, when present, to polymer (B) and, when present, to a non-electroactive inorganic filler material. Preferably, said at least one optional component are selected from an antifoam agent, a surfactant, an anti-bacterial agent, a filler and mixtures thereof. Typically, such optional components, when present, are in an amount lower than 15 wt%, preferably below 10 or below 7 wt% over the total weight of (C).

Preferably, the amount of VDF-based component (F) as defined above in composition (C) is from 10 to 95 wt%, more preferably from 20 to 80 wt%, 30 to 70 wt%, 40 to 60 wt% or 50 wt%.

In a preferred embodiment, composition (C) consists of VDF-based component (F) as defined above, i.e it is composed 100% of VDF-based polymers, provided that at least 40 wt% consists of copolymer (A).

In the context of the invention, the term "substrate layer" is hereby intended to denote either a monolayer substrate consisting of a single layer or a multilayer substrate comprising at least two layers adjacent to each other.

The substrate layer (P) may be either a non-porous substrate layer or a porous substrate layer. Should the substrate layer be a multilayer substrate, the outer layer of said substrate may be either a non-porous substrate layer or a porous substrate layer. By the term "porous substrate layer", it is hereby intended to denote a substrate layer containing pores of finite dimensions.

The substrate (P) has typically a porosity advantageously of at least 5%, preferably of at least 10%, more preferably of at least 20% or at least 40% and advantageously of at most 90%, preferably of at most 80%, e.g. measured via methods based on the weight/density ratio or using liquid or gas absorption methods, e.g. according to the American Society for Testing and Materials (ASTM) D-2873 or equivalent methods known to the person skilled in the art.

The thickness of substrate (P) is not particularly limited and is typically from 3 to 100 micrometers, preferably form 5 and 50 micrometers.

The substrate (P) is advantageously a fabric made from one or more sets of polymer fibres. For the purpose of the present invention, the term "fabric" is understood to mean a planar textile structure obtainable by interlacing one or more sets of polymer fibres leading to numerous pores.

The fabric may be a woven fabric made from one or more sets of polymer fibres or a non-woven fabric made from one or more sets of polymer fibres.

By "woven fabric" it is intended to denote a planar textile structure obtainable by interlacing two or more sets of polymer fibres at right angles to each other thereby providing ends which run lengthwise in the fabric and picks which run crosswise in the fabric. By "non-woven fabric" it is intended to denote a planar textile structure obtainable by randomly interlocking or bonding mechanically, thermally or chemically one or more sets of polymer fibres leading to numerous pores.

The fabric may be a uni-directional fabric wherein the majority of the polymer fibres run in one direction, or a multi-directional fabric wherein two or more sets of continuous fibres run in different directions.

The substrate (P) can be made by any porous substrate or fabric commonly used for a separator in electrochemical device, e.g. comprising at least one material selected from the group consisting of polyethyleneterephthalate, polybutyleneterephthalate, polyester, polyacetal, polyamide, polycarbonate, polyimide, polyetherether ketone, polyether sulfone, polyphenylene oxide, polyphenylene sulfide, polyethylene naphthalene, polyvinylidene fluoride, polyethylene oxide, polyacrylonitrile, polyethylene, polypropylene, fluorinated polymers such as PVDF and PTFE (polytetrafluoroethylene), or their mixtures. Preferably, the substrate (P) is polyethylene or polypropylene.

The ratio between the weight of the coating and the weight of the support layer in the at least partially coated separator according to the invention is typically 3 :1 to 0.5: 1, such as 2:1, 1.5:1, 1:1 or 0.75: 1.

The inventors found that in the separator according to the invention the adhesion of the coated separator as defined above to the electrode in the assembly according to the invention is remarkably higher than that obtainable using a coating composition comprising exclusively a vinylidene fluoride polymer containing less than 2 wt% in weight of recurring units deriving from hexafluoropropylene.

In the separator according to the invention, a suitable adhesion is obtained also in the absence of carboxymethyl cellulose (CMC) as a binder. Due to issues linked to the low thermal, chemical and electrochemical stability of CMC, the possibility to avoid its presence in the separator coating is a remarkable advantage.

The inventors found that by using the specific coating composition (C) as defined above, a battery separator-electrode assembly can be obtained wherein the components have improved adhesion, such that they cannot be separated by applying a force lower than 1 N/m. The improved adhesion is advantageous to provide a highly mechanically and chemically/electrochemically stable assembly, resulting in higher overall performance and longer service life of the electrolytic cell.

As shown in Figures 1 and 2, separators A and B according to the invention coated with a polymer having at least 3 wt% of recurring units which derive from HFP show a good to excellent adhesion to the electrode in the assembly, whereas comparative separators coated with a polymer (C1) containing less than 2 wt% of recurring units which derive from HFP show no adhesion to the electrode. No adhesion to the electrode was observed also in case of separators coated with compositions comprising 70 wt% or more of comparative polymer (C1).

In another aspect, the present invention pertains to an electrochemical cell comprising the assembly as defined above.

In another aspect, the invention provides a process for the preparation of the assembly for an electrochemical cell as defined above, which process comprises the steps of:
i. providing the at least partially coated separator a);
ii. providing the electrode b);
iii. assembling a) and b) by contacting at least one side of a) and one side of b);
iv. treating the assembly obtained in step iii. to obtain permanent adhesion of a) and b).

Preferably, in step iv. of the process according to the present invention the permanent adhesion is obtained via hot lamination, hot calendering between at least two rolls or hot pressing at a temperature from 30 to 120°C.

Lamination typically comprises stacking the layers, thereby providing an assembly wherein the layers do not adhere to each other, and applying a suitable pressure on the assembly so obtained, at a temperature from 30 to 120°C, preferably from 50 to 110°C, to obtain an assembly of adhering layers.

Preferably, the separator a) provided in step i. of the process according to the invention is obtained via a process comprising the steps of:
- providing a non-coated substrate layer (P1);
- providing a coating composition (C) comprising an aqueous dispersion of primary particles comprising at least one vinylidene fluoride copolymer (copolymer (A)), wherein at least 3 mol% of recurring units of copolymer (A) derive from hexafluoropropylene and wherein the primary particles of copolymer (A) have an average primary particle size of less than 1 micrometer, as measured according to ISO 13321;
- applying the coating composition (C) on at least one portion of the substrate layer (P1);
- drying the at least partially coated substrate layer (P) thus obtained.

Alternatively, the separator a) can be obtained via a coating process using a slurry of composition (C) obtained by suspending particles of polymer (A) in a powdery form in a liquid medium, or as a solution in a suitable solvent, such as acetone or NMP, optionally in the presence of water.

Preferably, in the process according to the invention the at least partially coated substrate layer (P) is dried at a temperature lower than 55°C, preferably lower than 40°C, more preferably lower than 30°C.

The coating composition is typically applied onto at least one surface of a substrate layer by a technique selected from casting, spray coating, roll coating, doctor blading, slot die coating, gravure coating, ink jet printing, spin coating and screen printing, brush, squeegee, foam applicator, curtain coating, vacuum coating.

Preferably, the coating composition C) comprises an aqueous dispersion (latex) of primary particles of copolymer (A) having an average primary particle size of less than 1 micrometer, as measured according to ISO 13321, or a dispersion of particles of copolymer (A) in a suitable liquid medium, wherein the size of the particles of copolymer (A) in the dispersion is above 1 micrometer, as measured according to ISO 13321.

The invention is described hereunder in more detail with reference to the following examples, which are provided with the purpose of merely illustrating the invention, with no intention to limit its scope.

### Experimental part

### 1) Separator Coating using VDF-based polymers latexes

The polyolefin substrate (Tonen^{®} F20BMU, PE material, 20µm, 40% porosity, pore size of 0.09µm) was coated by using a solution of VDF-based latexes mixed with alumina (CR6^{®} by Baikowski), SDS (Sodium Dodecyl Sulfate 28% by Ametech^{®}, a surfactant to improve the polyolefin substrate wettability) and BYK^{®} 023 (an antifoaming agent by BYK-Chemie).

The following coating compositions were used:
- Composition A: polymer (A) = copolymer of VDF and 25 wt% HFP
- Composition B: copolymer (A)= copolymer of VDF and 39 wt% HFP
- Comparative composition (C1): VDF-based polymer = copolymer of VDF, 0 mol% HFP

All components were added in the following percentages: alumina 87 wt%; VDF-based polymer 10 wt%; surfactant 2 wt%; antifoaming 1w t%, all percentages were calculated on the weight of the component with respect to the total solid content. Then water was added to obtain an ideal solid content in the range 48wt%-53wt% depending on the type of latex used. Two kinds of VDF based polymers (compositions A and B according to the invention) were used differentiating for the amount of HFP content.

Before coating the separator, the pH was adjusted to 7 by adding two drops of an ammonia solution (30 wt% in water).

### Coating of the separator

Mixture obtained by binding a latex of copolymer C and a latex of polymer B in various weight ratios were also use as coating compositions for the preparation of coated separators to be tested for assembly manufacturing.

All ingredients were mixed together for at least 20 minutes by using a speedymixer at 2000 rpm for latex C1 and B and at 1000 rpm for latex A.

The solution was then cast on the polyolefin substrate by using a casting knife to create a coating with average thickness of 10 micrometers. Finally the coating was dried at 25-27°C.

### Cathode preparation

The cathode was prepared by casting on an Al collector a slurry containing 95wt% of LiCoO₂ (Cellcore^{®} LCO D10 Umicore^{®}); 2wt% PVDF (Solef^{®} 5130, Solvay Specialty Polymers); 3wt% carbon black (Super C65 Imerys ^{®}). The coating thickness was set in order to obtain a target porosity of 40%.

### Lamination conditions

Lamination of the separator and of the electrode was performed at 70°C (data in Table 1/Figure 1) or 80°C (data in Table 2/ Figure 2) applying a pressure of 50 MPa for 15 min on rectangular samples with dimensions of 10x2 cm². Peeling tests were carried out at 10 mm/min and 180°.

**Table 1**

| **VDF-based polymer** | **Coating adhesion (N/m)** |
|---|---|
| No coating (inert support only) | No adhesion |
| C1 (no HFP) | No adhesion |
| A (25 wt% HFP) | 1.8 |
| B (39 wt% HFP) | 3.9 |
| C1: B in 70/30 weight ratio | No adhesion |
| C1: B in 90/10 weight ratio | No adhesion |
| C1: B in 80/30 weight ratio | No adhesion |

**Table 2**

| **VDF-based polymer** | **Coating adhesion (N/m)** |
|---|---|
| No coating (inert support only) | No adhesion |
| C1 (no HFP) | No adhesion |
| A (25 wt% HFP) | 5.0 |
| B (39 wt% HFP) | 3.5 |
| C1: B in 70/30 weight ratio | No adhesion |
| C1: B in 90/10 weight ratio | No adhesion |
| C1: B in 80/30 weight ratio | No adhesion |

### 2) Separator Coating using a solution of VDF-based polymers

Solutions of VDF-based polymers with various contents of HFP co-monomer were prepared (VDF based polymer:acetone:water = 10wt%:85wt%:5wt%).

The polyolefin substrate (Celgard^{®} EK2540, PE material, 25 µm, 60% porosity, average pore size of 0.09 µm) was coated by using the above identified solution.

The following coating compositions were used:
- Composition S-a: copolymer (A) = copolymer of VDF and 11.8 wt% HFP, no AA (monomer derived from acrylic acid)
- Composition S-b: copolymer (A)= copolymer of VDF and 8.5 wt% HFP no AA
- Composition S-c: copolymer (A)= copolymer of VDF, 5.2 wt% HFP and 1wt % AA
- Composition S-d: copolymer (A)= copolymer of VDF, 7.2 wt% HFP and 0.6wt% AA
- Composition S-e: copolymer (A)= copolymer of VDF, 9.95 wt% HFP and 0.52 wt% AA
- Composition C2: copolymer (A)= copolymer of VDF, 1.86 wt% HFP and 0.55 wt% AA

### Coating of the separator

The solutions was magnetically stirred at 40°C-50°C until complete dissolution was obtained. The solution was then cast on the polyolefin substrate by using a casting knife to create a coating with average thickness of 5 micrometers. Finally the coating was dried at 25-27°C and annealed at 70°C.

### Cathode preparation

The cathode was prepared by casting on an Al collector a slurry containing 97wt% of LiCoO₂ (Cellcore^{®} LCO D10 UMICORE^{®}); 1wt% PVDF Solef^{®} 5130 Solvay Specialty Polymers; 2wt% carbon black (Super C65 Imerys^{®} ). The coating thickness was set in order to obtain a target porosity of 42%.

### Lamination conditions

Lamination of the separator and of the electrode was performed at 85°C applying a pressure of 1 MPa for 15 min (Table 3 and Figure 3) or at 95°C applying a pressure of 1 MPa for 15 min (Table 4 and Figure 4) on rectangular samples with dimensions of 10x2 cm². Peeling tests were carried out at 10 mm/min and 180°.

**Table 3**

| **Experiment** | **Adhesion (N/m)** |
|---|---|
| **Temp = 85°C** | |
| **Lamination time : 15 min** | |
| S-a | 1.8 |
| S-b | 1.6 |
| S-c | 2.2 |
| S-d | 2.9 |
| S-e | 3.0 |
| C2 | 0.7 |

**Table 4**

| **Experiment** | **Adhesion [N/m]** |
|---|---|
| **Temp = 95°C** | |
| **Lamination time :15 min** | |
| S-a | 1.9 |
| S-b | 2.8 |
| S-c | 3.5 |
| S-d | 6.3 |
| S-e | 8.4 |
| C2 | 0.8 |

### 3) Separator Coating using a latex of VDF-based polymers in the absence of an inorganic filler

The polyolefin substrate (Tonen^{®} F20BMU, PE material, 20µm, 40% porosity, pore size of 0.09µm) was coated by using a solution of VDF-based latexes, SDS (Sodium Dodecyl Sulfate 28% by Ametech^{®}, a surfactant to improve the polyolefin substrate wettability) and BYK^{®} 023 (an antifoaming agent by BYK-Chemie).

The following coating compositions were used:
- Composition A: copolymer (A) = copolymer of VDF and 25 wt% HFP
- Composition B: copolymer (A)= copolymer of VDF and 39 wt% HFP
- Comparative composition (C3): VDF-based polymer = copolymer of VDF, 0 mol% HFP

All components were added in the following percentages: VDF-based polymer 92.5 wt%; surfactant 5 wt%; antifoaming 2.5 wt%, all percentages were calculated on the weight of the component with respect to the total solid content. The ideal solid content is in the range 20wt%-30wt% depending on the type of latex used. Two kinds of VDF- based polymers (compositions A and B) according to the invention were used, which differ for the amount of HFP content.

Before coating the separator the pH was adjusted to 7 by adding two drops of an ammonia solution (30wt% in water).

### Coating of the separator

All ingredients were mixed for at least 20 min by using a speedymixer at max 2000 rpm latexes C1 and A and at 800 rpm for latex B.

The solution was then cast on the polyolefin substrate by using a casting knife to create a coating with average thickness of 3 micrometers. Finally the coating was dried at 25-27°C.

### Cathode preparation

The cathode was prepared by casting on an Al collector a slurry containing 95wt% of LiCoO₂ (Cellcore^{®} LCO D10 UMICORE^{®}); 2wt% PVDF; 3wt% carbon black (Super C65 Imerys). The coating thickness was set in order to obtain a target porosity of 40%.

### Lamination conditions

Lamination of the separator and of the electrode was performed at 70°C, (Table 5, Figure 5), and 90°C (Table 6, Figure 6), applying a pressure of 1 MPa for 15 min on rectangular samples with dimensions of 10x2 cm². Peeling tests were carried out at 10 mm/min and 180°C.

**Table 5**

| **Experiment** | **Adhesion [N/m]** |
|---|---|
| **Temp 70°C** | |
| **Lamination time: 15 min, pressure 1 MPa** | |
| C3 | 6.0 |
| B | 14.5 |
| A | 25.1 |

**Table 6**

| **Experiment** | **Adhesion [N/m]** |
|---|---|
| **Temp 90°C** | |
| **Lamination time : 15 min, pressure 1 MPa** | |
| C3 | 5.0 |
| B | 44.3 |
| A | 36.6 |

## Claims

1. An assembly for an electrochemical cell comprising:
a) a separator for an electrochemical cell comprising a substrate layer (P), which layer is at least partially coated with a composition (composition (C)) comprising a component (F) consisting of a vinylidene fluoride (VDF) polymer, or of a blend of VDF polymers, wherein not less than 40% in weight over the total weight of (F) (wt%) consists of at least one vinylidene fluoride copolymer (copolymer (A)), and wherein not less than 3 wt% of the recurring units of copolymer (A) derive from hexafluoropropylene (HFP); and
b) an electrode,
wherein at least one side of a) permanently adheres to b).

2. The assembly for an electrochemical cell according to claim 1, wherein the copolymer (A) comprises from 15 to 50 wt%, preferably from 25 to 40 wt%, of recurring units deriving from HFP.

3. The assembly for an electrochemical cell according to any of the preceding claims, wherein the copolymer (A) further comprises at most 10 wt% of recurring units derived from at least one (meth)acrylic monomer (MA) having formula (I) 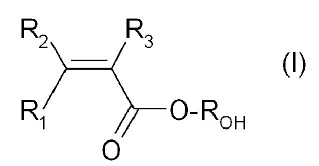 wherein:
- R₁, R₂ and R₃, equal to or different from each other, are independently selected from a hydrogen atom and a C₁-C₃ hydrocarbon group, and
- R_{OH} is a hydrogen atom or a C₁-C₅ hydrocarbon moiety comprising at least one hydroxyl group.

4. The assembly according to any of the preceding claims, wherein the amount of (F) in composition (C) is from 10 wt% to 95 wt%.

5. The assembly according to any of the preceding claims, wherein component (F) further comprises a VDF homopolymer or a copolymer (polymer (B)), provided that, when polymer (B) is a copolymer, the content of recurring units deriving from HFP in polymer (B) is below 2 wt%.

6. The assembly according to any of the preceding claims, wherein the separator for an electrochemical cell a) according to any of the preceding claims, wherein the substrate layer is selected from the group of polyethylene terephthalate, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, polyvinylidene fluoride, polyethyleneoxide, polyacrylonitrile, polyethylene and polypropylene, or their mixtures.

7. An electrochemical cell comprising the assembly according to any of the preceding clams.

8. A separator for an electrochemical cell comprising a substrate layer (P), which layer is at least partially coated with a composition (composition (C)) comprising a component (F) consisting of a vinylidene fluoride (VDF) polymer, or of a blend of VDF polymers, wherein not less than 40% in weight over the total weight of (F) (wt%) consists of at least one vinylidene fluoride copolymer (copolymer (A)), and wherein not less than 3 wt% of the recurring units of copolymer (A) derive from hexafluoropropylene (HFP).

9. A process for the preparation of the assembly for an electrochemical cell according to any of claims 1-6, comprising the steps of:
i. providing the at least partially coated separator a);
ii. providing the electrode b);
iii. assembling a) and b) by contacting at least one side of a) and one side of b);
iv. treating the assembly obtained in step iii. to obtain permanent adhesion of a) and b).

10. The process of claim 9, wherein in step iv. the permanent adhesion is obtained via hot lamination, hot calendering between at least two rolls or hot pressing at a temperature from 30 to 120°C.

11. The process of claim 9 or 10, wherein the separator a) of step i. is obtained via a process comprising the steps of:
- providing a non-coated substrate layer (P1);
- providing a coating composition (C) comprising an aqueous dispersion of primary particles comprising at least one vinylidene fluoride copolymer (copolymer (A)), wherein at least 3 wt% of recurring units of copolymer (A) derive from hexafluoropropylene and wherein the primary particles of copolymer (A) have an average primary particle size of less than 1 micrometer, as measured according to ISO 13321;
- applying the coating composition (C) on at least one portion of the substrate layer (P1); and
- drying the at least partially coated substrate layer (P) thus obtained.

12. The process of claim 9 or 10, wherein the separator a) of step i. is obtained via a process comprising the steps of:
- providing a non-coated substrate layer (P1);
- providing a coating composition (C) comprising a dispersion of particles comprising at least one vinylidene fluoride copolymer (copolymer (A)), wherein at least 3 wt% of recurring units of copolymer (A) derive from hexafluoropropylene and wherein the primary particles of copolymer (A) have an average primary particle greater than 1 micrometer, as measured according to ISO 13321;
- applying the coating composition (C) on at least one portion of the substrate layer (P1);
- drying the at least partially coated substrate layer (P) thus obtained.
